# EUROPEAN PATENT APPLICATION

(11) **EP 3 998 195 A1**
(43) Date of publication of application: **18.05.2022**
(21) Application number: 21158224.2
(22) Date of filing: 19.02.2021
(51) Int. Cl.: B64C 7/00, B64C 9/02, B64C 29/00

(54) **AIRCRAFT FLAP-TO-FLAP SEAL**

(71) Applicant: Lilium eAircraft GmbH, 82234 Wessling (DE)
(72) Inventor: Brath, Kilian, 82234 Weßling (DE); Möbius, Andreas, 82234 Weßling (DE); Mueller, Lukas, 82234 Weßling (DE)
(74) Representative: Schmidt, Steffen

(57) **Abstract**

The invention refers to an aircraft, in particular to a vertical take-off and landing aircraft, and to a wing of such aircraft comprising a plurality of actuated flaps (2) each having at least one propulsion unit (4) included, the flaps BEING arranged next to each other along the wing span and independently actuated to pivot and further comprising an elastic seal in a gap between at least two of the flaps.

## Description

The present invention refers to a wing of an aircraft having a plurality of actuated flaps and in particular to a seal between adjacent flaps.

In the prior art, aero seals for high lift devices such as flaps on an aircraft are known in different locations of the wing: For example between fixed aerofoil like the wing trailing edge and a flap or as an overlay of different flaps as shown in US 10,690,740 B2 or EP 2 882 642 B1.

The sealing devices are often provided as sliding blades. When the flap extends the sealing blades cover the gaps to increase the aerodynamic performance.

However, these kinds of aero sealings are useful only for flaps which are moved relative to the fixed aerofoil. In more complex structures, for example in a vertical take-off and landing (VTOL) aircraft, the wing structure might be more complex.

The wings of VTOL may include a plurality of flaps each having integrated propulsion unit. The flaps are arranged in a movable manner with respect to the fixed wing and pivot relative to each other. The known aero sealings for high liftdevices, such as Fowler/Gouge flaps, are not useful for such wing and flap constructions. Hence, the sealing is not accurate, and any airflow through gaps of the aircraft wing and flaps can lower the overall aerodynamic efficiency of the aircraft and the lifting surface creates more noise.

Hence, it is the objective technical problem of the present invention to provide an aircraft wing or an aircraft including such a wing which provides more overall aerodynamic efficiency and lifting surfaces and reduces the creating of noise.

The problem is solved by an aircraft wing of claim 1 and an aircraft, in particular a VTOL, of claim 9.

A special feature of the solution of the present invention is the aero sealing in form of an elastic seal in a gap between at least two flaps of a plurality of flaps arranged in a single aircraft wing and which are independently actuated so that they are able to rotate against each other. The independently actuated flaps have each included a propulsion unit. Thus, the flaps allow thrust vectorising functionalities for an aerodynamic control of the aircraft. By sealing the gap between the flaps, noise generation can be reduced and the aerodynamic efficiency can be increased. The problem when having flaps with separately actuated propulsion units is to make sure that there is a limited amount of airflow between these units. Indeed, any airflow through the gap between the flaps would lower the overall dynamic efficiency of the lifting surface and would create more noise. The seal reduces any airflow between the flaps and thus, providing a continuous airstream into the propulsion units of each flap and increasing the aerodynamic efficiency. In particular, a possible design of a VTOL may include flaps having vertical side walls which are turned relative to each other around an axis perpendicular to these side walls. Additionally, the gap between the flaps may vary in size and may depend on the wing bending. Hence, the seal has to fulfil its function through a wide range of gap sizes and relative wall angles. The seal according to the present invention provides the possibility to limit the amount of air flow through these gaps even if the gap varies in size as the seal is arranged in the gap between adjacent flaps. Preferably, the seal is arranged on the vertical side wall of the flap which is adjacent to the side wall of the neighbouring flap to prohibit an air flow through the gap even if the size of the gap may vary when the wing is bending.

According to a preferred embodiment of the present invention, each of the at least two flaps include a lateral face and the lateral faces of the two flaps facing each other, wherein the elastic seal is permanently connected with one of the lateral side faces and in frictional contact to the lateral faces of the other flap. For example, according to an embodiment of the present invention the elastic seal may be adhesively connected with the lateral side face. In alternative embodiments, it may also be form-locked, e.g. bolded or clammed. By providing the elastic seal between the two lateral side faces of the flaps, in a neutral position of the flaps such as a flap position in a stationary flight attitude the sealing bridges the gap between the two flaps such that a continuous surface of the profile provided by the flaps is achieved. Such a configuration does not only limit the amount of air flow between the flaps but also provide a smooth overall surface of the flaps so that the overall aerodynamic resistance is reduced.

According to a preferred embodiment, the sealing has a tangent surface which conforms to adjacent profiles of the two flaps, so as to deflect an airstream impinging on the seal in directions of the adjacent profiles. This further increases the aerodynamic performance of the wing and flap configuration at least in a neutral flap position when the aircraft in a stationary flight attitude.

According to a preferred embodiment, each of the at least two flaps comprises an air inlet of the propulsion unit and the tangent surface of the seal is designed in an area close to the inlets of the propulsion units to redirect an impinging airstream in directions to the inlets of the propulsion units. Thus, the efficiency of the airstream in the area of the inlets of the propulsion units can be increased.

According to a preferred embodiment, the two flaps have a common axis of rotation and the seal is arranged in the gap in a flat section plane wherein the section plane is perpendicular to the common axis of rotation. Such a configuration allows to include a plurality of flaps each including a propulsion unit in a single wing. For example, for a vertical take-off and landing (VTOL) aircraft a configuration with three or more flaps each having an independent propulsion unit included is useful for controlling the aircraft. Moreover, this configuration has the advantage that the width of the gap between two flaps maintains almost constant even if the flaps pivot against each other. Hence, the sealing is able to limit the airstream through the gap even if the flaps have different angle configurations with respect to the common axis of rotation.

According to a preferred embodiment, the sealing is provided at least on a leading edge, a top and a bottom aerodynamic surface of the flaps. The leading edge, the top and the bottom aerodynamic surfaces of the flaps are the most critical parts of the flaps in view of the aerodynamic quality of the profile. Hence, having the sealing at least at these regions further increases the aerodynamic efficiency of the overall configuration of the wing with the flaps.

According to a preferred embodiment, the sealing is provided as a continuous band along a part of the circumference of the gap. Having a continuous band, the aero sealing is most efficient to limit the amount of airflow between the flaps.

According to a preferred embodiment, the sealing is made of Teflon, a plastic material or a plastic material having fibres included, preferable Kevlar fibres. The plastic material may be a foam polymer. In other embodiments, the seal may also be a plastic material having one or more hollow chambers included. In general, compressible materials are preferred as these materials account for the variation in size of the gap between the flaps throughout the operating envelope of the aircraft. Teflon has the further advantage of reducing the friction between the flaps. Elastic plastic material having fibres included are further increased in mechanical strength so that the material has a less abrasion. The elastic plastic foam materials have the best compression capability so that the sealing is efficient even for a variation in size of the gap.

According to a further aspect, the invention provides an aircraft having at least two wings of one of the previous embodiments. In particular, such kinds of wings are useful for thrust vectoring aircrafts, in particular for vertical take-off and landing (VTOL) aircrafts, as the independent control of the propulsion units and the flaps allow thrust vectoring functionalities which is useful to manoeuvre the aircraft, in particular a VTOL aircraft having fixed wings.

Further features and advantages of the present invention will be described in the following description with reference to the attached drawings. The drawings show the following:
- Figure 1: is a broken three-dimensional view of two adjacent flaps with a small gap in between.
- Figure 2: is a sectional view along A-A in Figure 1.
- Figure 3: is a flap side view showing the seal perimeter.

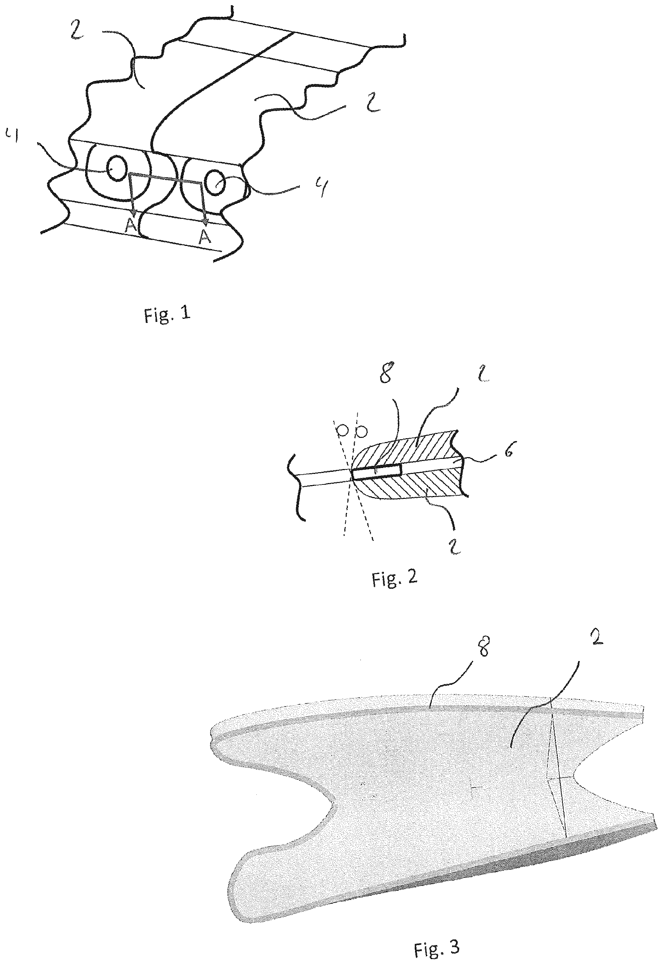

In Figure 1, a configuration of two adjacent flaps 2 is shown. The flaps 2 are arranged next to each other. Although only two flaps 2 are shown in the same direction it should be understood that these flaps are part of a system of a plurality of more than two flaps which can be arranged along a wing of an aircraft, preferably a fixed wing aircraft.

The flaps 2 can be rotated along an axis of rotation where the axis of rotation is the same direction for both flaps. However, the flaps can be rotated independently. Thus, while Figure 1 shows the two flaps 2 in the same angle configuration, the flaps may also take a position in which the flaps are rotated against each other.

Each of the flaps 2 includes a propulsion unit, preferably an electrical propulsion unit which is fully integrated in the flap. Figure 1 shows an air flow inlet 4 on the front side of each of the flaps 2. As the flaps can be rotated individually, the propulsion units allow a thrust vectoring functionality which is useful for a VOLT with fixed wings.

According to the embodiments of the present invention, the flaps are separated by a gap 6 which is provided between the two lateral faces of the flaps 2 facing each other. In the gap 6, a seal 8 is provided on the circumference part of the lateral sides. The seal 8 is permanently, preferably adhesively, connected to one lateral surface and in frictional connection with the other lateral surface so that the flaps 2 can rotate separately to each other.

The sealing 8 is provided at least on those parts of the circumference of the lateral side of the flaps which forms the leading edge, the top surface and the bottom surface of the profile of the flaps. Thus, the sealing limits an amount of air flow into the gap 6. It should be understood that the sealing is most efficient in the neutral position where the two flaps have the same angle configuration with respect to the common axis of rotation. However, even if the flaps stay in a configuration with slightly different angles with respect to the axis of rotation the seals still function to at least reduce the airflow in the gap 6 between the two flaps 2. The gap may have a size between 2 mm to 12 mm, preferably between 4 mm and 10 mm. Moreover, the gap is not necessarily constant but may vary over the cross section of the gap perpendicular to the adjacent side walls of the flaps. The gap may also vary dynamically when the wing is bending. The sealing material in general is compressible so that the gap is filled even if the gap varies in size.

With reference to Figure 2 the profile of the leading edge of the seal is shown in more detail. The dashed lines show the tangent lines on the seal close to the profile of each of the flaps 2. The profile of the front edge of the seal 8 is a continuous extension of the curve of the profile of the flaps. Hence, at least when the two flaps are the same angle configuration with respect to the axis of rotation, a continuous surface is provided so that the aerodynamic efficiency of the system is increased and any noise generated by the airstream is reduced.

Figure 3 shows a flap side view with a seal perimeter on circumference on the top surface, the bottom surface and the leading edge of the flap. It can be seen even if the flaps have a small difference in the angle position (with respect to the axis of rotation which is perpendicular to the image plane of Figure 3) the sealing still covers the gap so that the airflow in the gap is limited.

While the Figures show only two flaps next to each other, it should be understood that a plurality of flaps can be provided on each single wing of an aircraft. For example, three, four or more flaps can be provided in one line along the wing span. Such a configuration is helpful for vertical take-off and landing aircrafts which have a fixed wing in combination with rotatable propulsion units integrated in the flaps. As the propulsion units can be rotated individually, the configuration helps to manoeuvre the aircraft including the configuration for cruising flight and a configuration for hovering the aircraft for take-off and landing.

### Reference Signs

- 2: flap
- 4: inlet of propulsion unit
- 6: gap
- 8: aero seal

## Claims

1. An aircraft wing comprising a plurality of actuated flaps (2) each having at least one propulsion unit included,
the flaps (2) are arranged next to each other along the wing span and independently actuated to pivot,
and further comprising an elastic seal (8) in a gap (6) between at least two of the flaps (2).

2. The aircraft wing of claim 1, wherein each of the at least two flaps (2) include a lateral face and the lateral faces of the two flaps facing each other, wherein the elastic seal (8) is permanently connected with one of the lateral side faces and in frictional contact to the lateral faces of the other flap.

3. The aircraft wing of any one of the previous claims having a tangent surface which conforms to adjacent profiles of the two flaps (2), so as to deflect an airstream impinging on the seal in directions of the adjacent profiles.

4. The aircraft wing of claim 3, wherein each of the at least two flaps (2) comprises an air inlet (4) of the propulsion unit and the tangent surface of the seal (8) is designed in an area close to the inlets of the propulsion units to redirect an impinging airstream towards the inlets of the propulsion units.

5. The aircraft wing of any one of the previous claims, wherein the two flaps have a common axis of rotation and the seal (8) is arranged in the gap (6) in a flat section plane wherein the section plane is perpendicular to the common axis of rotation.

6. The aircraft wing of any one of the previous claims, wherein the seal (8) is provided at least on a leading edge, a top and a bottom aerodynamic surface of the flaps (2).

7. The aircraft wing of any one of the previous claims, wherein the seal (8) is provided as a continuous band along a part of the circumference of the gap (6).

8. The aircraft wing of any one of the previous claims, wherein the seal (8) is made of Teflon, a plastic material or a plastic material having fibres included, preferable Kevlar fibres.

9. The aircraft wing of claim 9, wherein the seal (8) is a foam material and/or the material includes one or more cavities.

10. An aircraft having at least two wings of one of the previous claims each including a plurality of flaps (2) and each pair of adjacent flaps (2) is provided with a sealing.

11. The aircraft of claim 10, wherein the aircraft is a vertical take-off and landing, VTOL, aircraft having fixed wings each having a plurality of flaps (2) with integrated propulsion units.
